# EUROPEAN PATENT APPLICATION

(11) **EP 1 342 659 A2**
(43) Date of publication of application: **10.09.2003**
(21) Application number: 03005132.0
(22) Date of filing: 07.03.2003
(51) Int. Cl.: B62M 9/12

(54) **Bicycle rear derailleur**

(30) Priority: 08.03.2002 CN 02106975
(71) Applicant: SHIMANO INC., Osaka (JP)
(72) Inventor: Ando, Yoshiaki, Kawachinagano-shi, Osaka (JP)
(74) Representative: GROSSE BOCKHORNI SCHUMACHER

(57) **Abstract**

An object of the invention is to provide a rear derailleur 100 for a bicycle, in which main components thereof, such as inner and outer plate members, are made from lightweight metal or steel plates having smaller areas to thereby decrease the amount of material used and hence achieve significant cost reduction while performance and functions thereof are kept the same as those of a conventional bicycle rear derailleur of the same type.

According to the invention, a rear derailleur 100 for a bicycle for shifting a chain engaging one of a plurality of sprockets for driving a rear wheel of the bicycle comprises a bracket 110 fixed to a frame of the bicycle, a base member 120 supported by the bracket 110, a link mechanism 130 coupled at one end thereof to the base member 120, a movable member 140 coupled to the other end of the link mechanism 130, an outer plate member movably supported to the movable member 140 and an inner plate member 180 located inwardly of the outer plate member 150 for, together with the outer plate member 150, freely rotatably supporting a guide pulley 160 and a tension pulley 170 between the outer plate member 150 and the inner plate member 180, characterized in that at least one of the inner and outer plate members includes a bent portion 182 formed by bending a plate member portion at an inner periphery of the at least one of the inner and outer plate members 180, 150 in a direction towards the other of the inner and outer plate members 180, 150, and a disengagement prevention portion 190 for preventing the chain from disengaging from the tension pulley 170 and/or the guide pulley 160 is defined by the bent portion 182 and the other of the inner and outer plate members 180, 150 facing the bent portion.

## Description

### Field of the Invention

This invention relates generally to a rear derailleur for a bicycle and, in particular, to a bicycle rear derailleur in which main components thereof, such as inner and outer plate members, are made from lightweight metal or steel plates having smaller areas to thereby decrease the amount of material used and hence achieve significant cost reduction while performance and functions thereof are kept the same as those of a conventional bicycle rear derailleur of the same type.

### Description of Prior Art

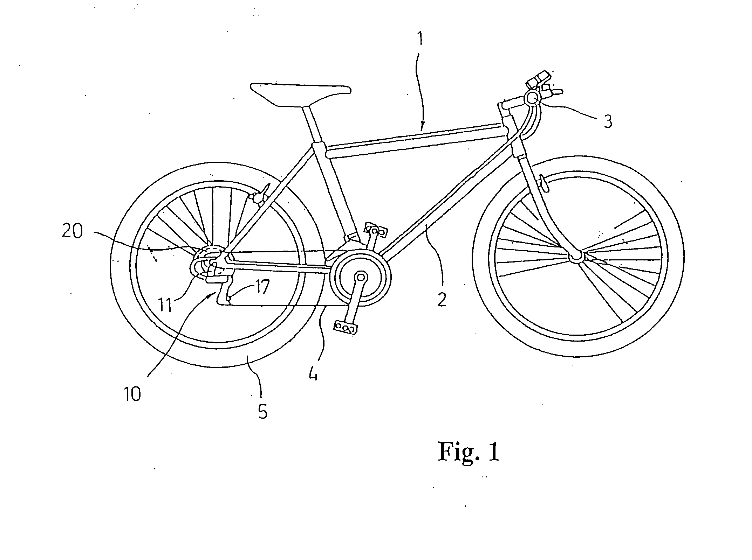

As shown in Figure 1, a multiple-speed bicycle 1 is provided with a plurality of rear sprockets and a rear derailleur at a rear portion of a frame thereof. To change the speed of the bicycle, a rider operates a shifting operating device (not shown) mounted on a handlebar to pull a tension pulley of the rear derailleur so that a chain originally engaging one of the rear sprockets is moved parallelly to another rear sprocket for shifting gears.

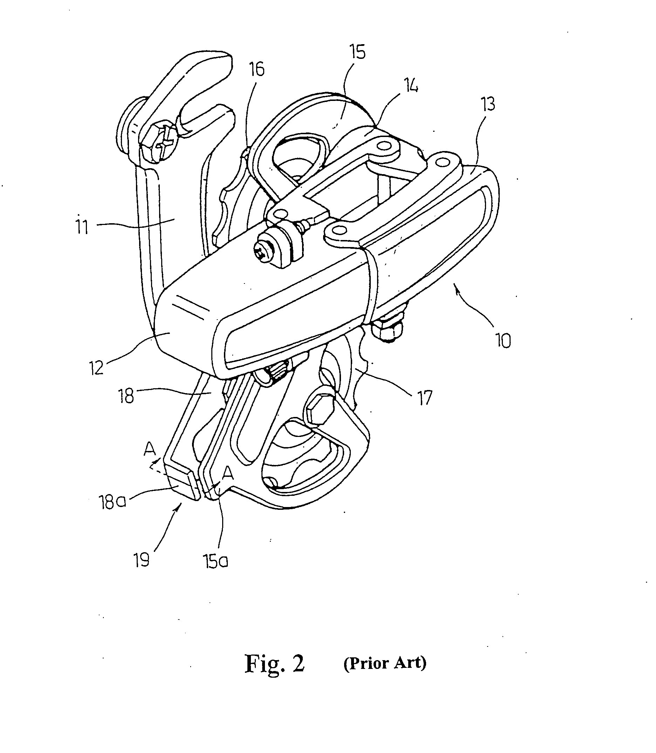

As shown in Figure 2, the conventional rear derailleur includes a bracket fixed to the frame of the bicycle, a base member supported by the bracket, a link mechanism coupled to the base member at one end thereof, a movable member coupled to the other end of the link mechanism, an outer plate member movably supported to the movable member and an inner plate member located inwardly of the outer plate member for freely rotatably supporting a guide pulley and the tension pulley between the outer plate member and the inner plate member.

Furthermore, in order to prevent the chain winding around the guide pulley and the tension pulley for driving the rear sprockets from accidentally disengaging and hence falling off from the rear derailleur, a disengagement prevention portion is often provided at a position near the guide pulley or the tension pulley to extend substantially across a gap between the outer plate member and the inner plate member. Thus, the chain can be prevented from significantly disengaging from the guide pulley or tension pulley. Figure 2 shows an example in which the disengagement prevention portion is provided near the tension pulley of the rear derailleur.

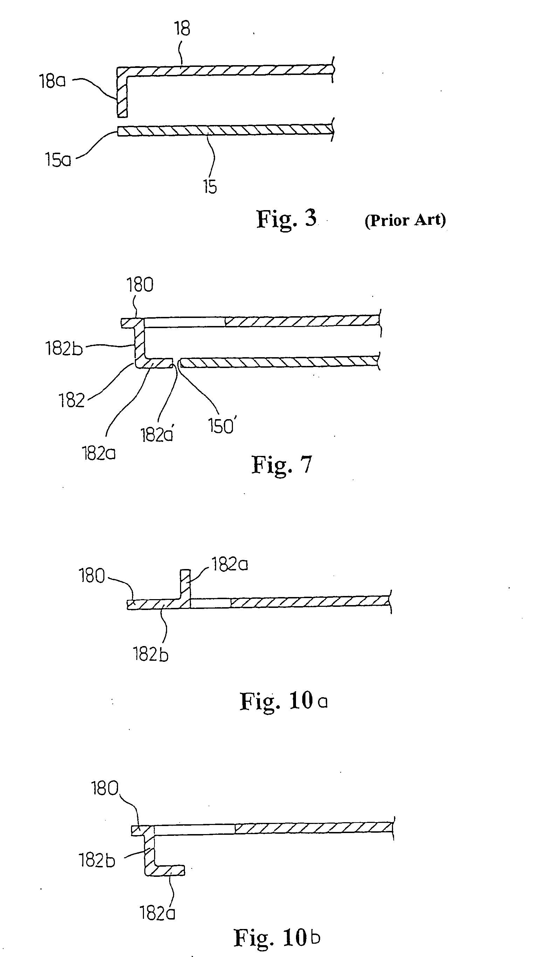

As shown in Figures 2 and 3, the disengagement prevention portion includes a first protruded portion protruding rearwards outwardly from a tail end of the outer plate member, and a second protruded portion protruding rearwards outwardly from a tail end of the inner plate member farther than the first protruded portion and then being bent particularly such that a front end edge of the second protruded portion is located very near a front end edge of the first protruded portion. Thus, the disengagement prevention portion is formed substantially across the gap between the outer plate member and the inner plate member.

In addition, various parts of the rear derailleur are made from different materials depending on required mechanical characteristics therefore, such as wear resistance. In general, the bracket is made from lightweight alloys and the link mechanism is made from lightweight alloys or steel. The outer plate member and the inner plate member are made from metal plates of lightweight alloys or steel by punching with a punching machine.

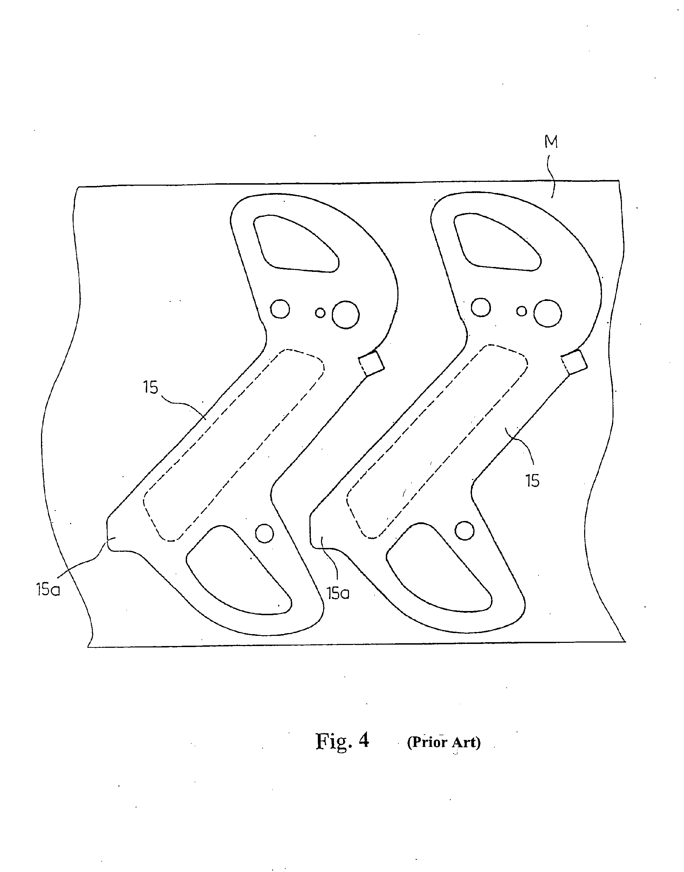

The outer plate member of the conventional rear derailleur is formed with a shape as shown in Figure 4 by punching a metal plate M with a punching die (not shown) of a punching machine (not shown). However, since the outer plate member of the conventional rear derailleur is formed at the tail end thereof with the first outwardly protruded portion-protruding rearwards so as to form a portion of the disengagement prevention portion, the overall width of the outer plate member is relatively large, which prohibits a compact layout of the outer plate members to be punched on the metal plate M. In other words, the portion of the metal plate M that is not effectively used and hence wasted is large, and as a result, the manufacturing cost is high.

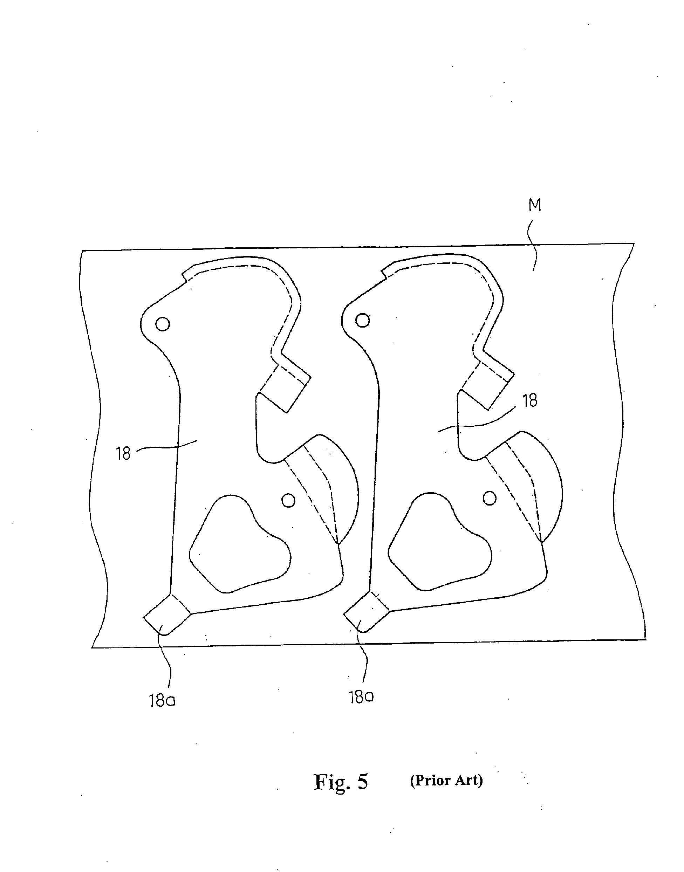

Likewise, the inner plate member of the conventional rear derailleur is formed with a shape as shown in Figure 5 by punching a metal plate M with a punching die (not shown) of a punching machine (not shown). However, since the inner plate member of the conventional rear derailleur is formed at the tail end thereof with the second outwardly protruded portion protruding rearwards so as to form a portion of the disengagement prevention portion, the overall width of the inner plate member is relatively large, which prohibits a compact layout of the inner plate members to be punched on the metal plate M. In other words, the portion of the metal plate M that is not effectively used and hence wasted is large, and as a result, the manufacturing cost is high.

In view of the above, an object of the present invention is to provide a bicycle rear derailleur in which main components thereof, such as inner and outer plate members, are made from lightweight metal or steel plates having smaller areas to thereby decrease the amount of material used and hence achieve significant cost reduction and lightweight effect while performance and functions thereof are kept the same as those of a conventional bicycle rear derailleur of the same type.

### Means for Solving Problems

In order to achieve the above object, according to a first aspect of the present invention, there is provided a rear derailleur for a bicycle for shifting a chain engaging one of a plurality of sprockets for driving a rear wheel of the bicycle, the rear derailleur comprising a bracket fixed to a frame of the bicycle, a base member supported by the bracket, a link mechanism coupled at one end thereof to the base member, a movable member coupled to the other end of the link mechanism, an outer plate member movably supported to the movable member and an inner plate member located inwardly of the outer plate member for, together with the outer plate member, freely rotatably supporting a guide pulley and a tension pulley between the outer plate member and the inner plate member, characterized in that at least one of the inner and outer plate members includes a bent portion formed by bending a plate member portion at an inner periphery of the at least one of the inner and outer plate members in a direction towards the other of the inner and outer plate members, and a disengagement prevention portion for preventing the chain from disengaging from the tension pulley and/or the guide pulley is defined by the bent portion and the other of the inner and outer plate members facing the bent portion.

Preferably, the disengagement prevention portion is defined by the bent portion and a portion of an outer periphery of the other of the inner and outer plate members facing the bent portion.

Preferably, the bent portion is formed by bending a plate member portion at an inner periphery of the inner plate member.

Preferably, the bent portion is formed by bending a plate member portion at an inner periphery of the outer plate member.

Preferably, the disengagement prevention portion is provided near the tension pulley or the guide pulley.

The bent portion can be of a L shape.

According to a second aspect of the invention, there is provided a rear derailleur for a bicycle for shifting a chain engaging one of a plurality of sprockets for driving a rear wheel of the bicycle, the rear derailleur comprising a bracket fixed to a frame of the bicycle, a base member supported by the bracket, a link mechanism coupled at one end thereof to the base member, a movable member coupled to the other end of the link mechanism, an outer plate member movably supported to the movable member and an inner plate member located inwardly of the outer plate member for, together with the outer plate member, freely rotatably supporting a guide pulley and a tension pulley between the outer plate member and the inner plate member, characterized in that the inner plate member includes a bent portion formed by bending a plate member portion at an inner periphery of the inner plate member in a direction towards the outer plate member and the outer plate member includes a bent portion formed by bending a plate member portion at an inner periphery of the outer plate member in a direction towards the inner plate member, and a disengagement prevention portion for preventing the chain from disengaging from the tension pulley and/or the guide pulley is defined by the bent portions of the inner and outer plate members.

### Brief Description of the Drawings

Figure 1 is a side view showing an entire structure of a general multiple-speed bicycle.
Figure 2 is a perspective view showing a conventional rear derailleur for a bicycle.
Figure 3 is a sectional view taken along the line A-A in Figure 2.
Figure 4 is a plan view showing a layout of the outer plate members used for the conventional bicycle rear derailleur on a metal plate to be punched.
Figure 5 is a plan view showing a layout of the inner plate members used for the conventional bicycle rear derailleur on a metal plate to be punched.
Figure 6 is a perspective view showing a bicycle rear derailleur according to a first embodiment of the invention.
Figure 7 is a sectional view taken along the line B-B in Figure 6.
Figure 8 is a plane view showing a layout of the outer plate members used for the bicycle rear derailleur according to the first embodiment of the invention on a metal plate to be punched.
Figure 9 is a plane view showing a layout of the inner plate members used for the bicycle rear derailleur according to the first embodiment of the invention on a metal plate to be punched.
Figures 10(a) and 10(b) are schematic views showing bending steps of a L-shaped bent portion of the inner plate member of the bicycle rear derailleur according to the first embodiment of the invention, wherein Figure 10(a) shows the sectional shape of the bent portion after a first bending step and Figure 10(b) shows the sectional shape of the bent portion after a second bending step.
Figure 11 is a perspective view showing a bicycle rear derailleur according to a second embodiment of the invention.
Figure 12 is a perspective view showing a bicycle rear derailleur according to a third embodiment of the invention.
Figure 13 is a perspective view showing a bicycle rear derailleur according to a fourth embodiment of the invention.
Figure 14 is a perspective view showing a bicycle rear derailleur according to a fifth embodiment of the invention.

### Detailed Description of Preferred Embodiments

### First Embodiment

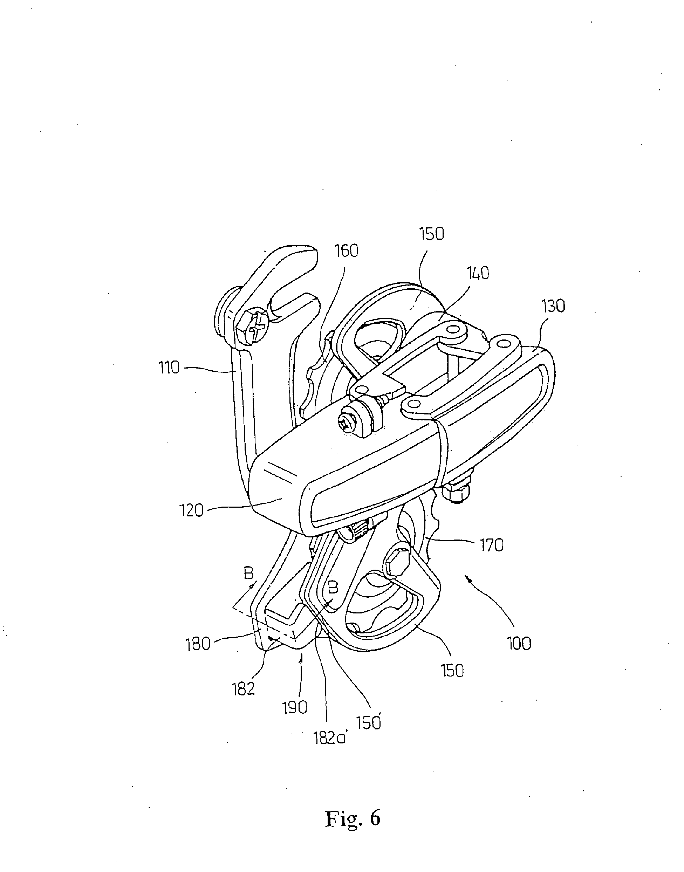

A first embodiment of the invention will be described in the following with reference to Figures 6 to 10.

Figure 6 is a perspective view of a bicycle rear derailleur 100 according to the first embodiment of the invention. As shown in the figure, similar to the conventional bicycle rear derailleur 10 shown in Figure 2, the bicycle rear derailleur 100 according to the first embodiment of the invention also includes a bracket 110 fixed to a frame 2 of a bicycle 1 (Fig. 1), a base member 120 supported by the bracket 110, a link mechanism 130 coupled to the base member 120 at one end thereof, a movable member 140 coupled to the other end of the link mechanism 130, an outer plate member 150 movably supported to the movable member 140 and an inner plate member 180 located inwardly of the outer plate member 150 for freely rotatably supporting a guide pulley 160 and the tension pulley 170 between the outer plate member 150 and the inner plate member 180. The bicycle rear derailleur 100 of the first embodiment of the invention is different from the conventional bicycle rear derailleur 10 in the location at which a disengagement prevention portion 190 is provided and in the configuration of the disengagement prevention portion 190.

As described above, the disengagement prevention portion 19 of the conventional bicycle rear derailleur 10 comprises a first protruded portion 15a protruding rearwards outwardly from a tail end of the outer plate member 15, and a second protruded portion 18a protruding rearwards outwardly from a tail end of the inner plate member 18 farther than the first protruded portion 15. In the bicycle rear derailleur 100 of the first embodiment of the invention, on the other hand, the disengagement prevention portion 190 is defined by a bent portion 182 which is formed by bending a portion of the inner plate member 180 formed at an inner periphery of a tail portion of the inner plate member 180 towards the outer plate member 150, and a portion 150' of an outer periphery of the outer plate member 150 facing a front end edge 182a' of the bent portion 182. Thus, the disengagement prevention portion 190 prevents a chain 4 (Figure 1) from disengaging from a tension pulley 170.

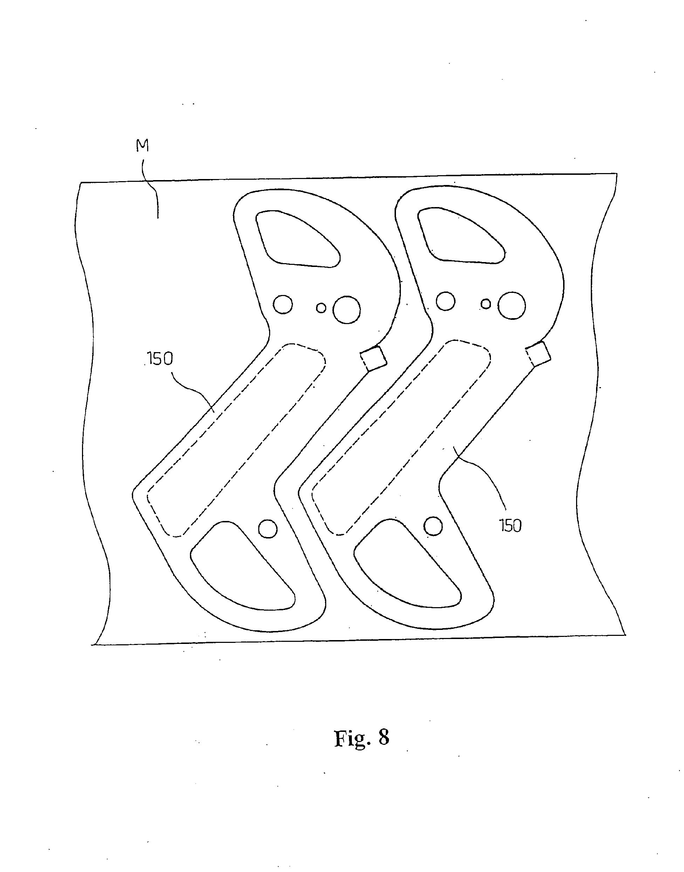

Figure 7 is a sectional view taken along the line B-B in Figure 6 for showing the disengagement prevention portion 190 of the bicycle rear derailleur 100 of the first embodiment of the invention. The relationship between the front end edge 182a' of the bent portion 182 of the inner plate member 180 and the portion 150' of the outer periphery of the outer plate member 150, which form the disengagement prevention portion 190, can be clearly observed in Figure 7. The front end edge 182a' and the portion 150' are very close to each other, thereby defining a nearly closed disengagement prevention portion 190.

Figure 8 shows a layout of the outer plate members 150 used for the bicycle rear derailleur 100 of the invention on a metal plate M to be punched by a punching machine (not shown). Since the outer plate member 150 of the invention does not have any protruded portion like the first protruded portion 15a of the outer plate member 15 of the conventional bicycle rear derailleur 10, the overall width and hence the area of the outer plate member 150 are smaller such that a more compact layout of the outer plate members 150 can be arranged on the metal plate M. That is, the number of the outer plate members 150 which can be punched out from the metal plate M of a given size is increased. As a result, a saving of material can be achieved and the weight and cost of the obtained plate member are reduced.

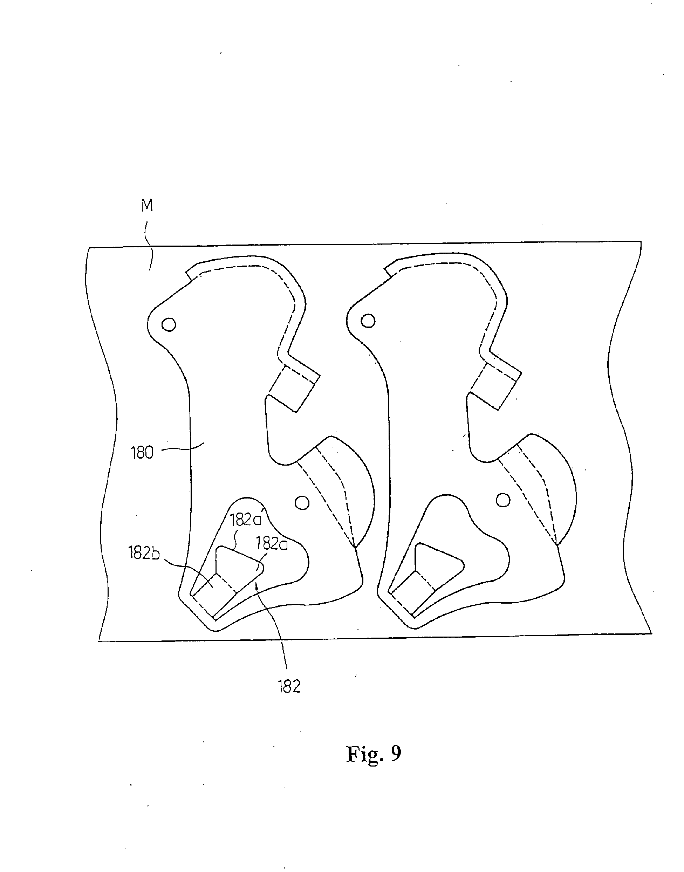

Figure 9 shows a layout of the inner plate members 180 used for the bicycle rear derailleur 100 of the invention on a metal plate M to be punched by a punching machine (not shown). Since the bent portion 182 of the inner plate member 180 for forming the disengagement prevention portion 190 is formed from a portion of the plate member at the inner periphery of the inner plate member 180, the inner plate member 180 is of a shape which does not have any protruded portion like the second protruded portion 18a of the inner plate member 18 of the conventional bicycle rear derailleur 10. Thus, the overall width and hence the area of the inner plate member 180 are smaller such that a more compact layout of the inner plate members 180 can be arranged on the metal plate M. That is, the number of the inner plate members 180 which can be punched out from the metal plate M of a given size is increased. As a result, a saving of material can be achieved and the weight and cost of the obtained plate member are reduced.

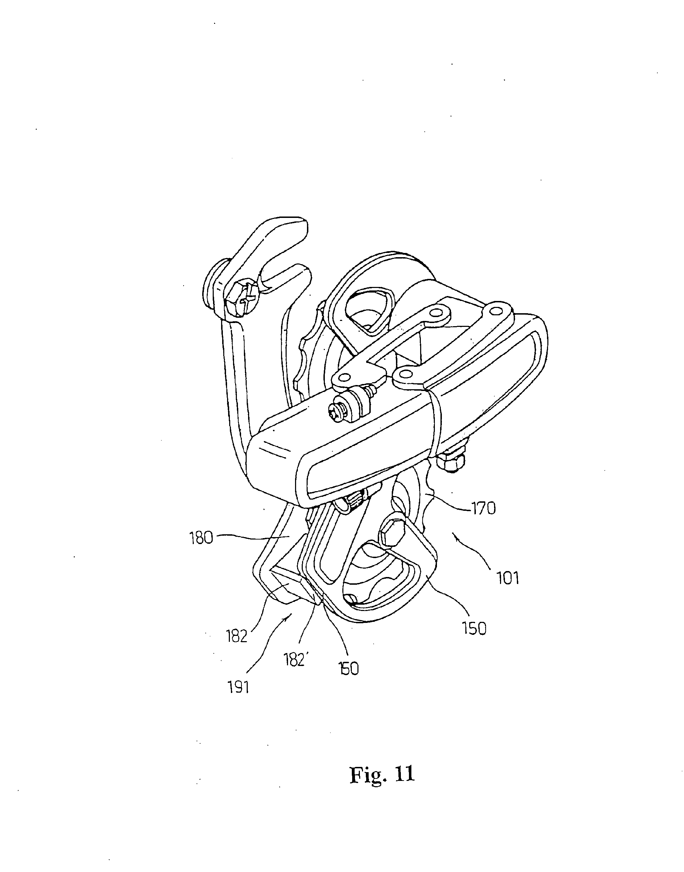

Figures 10(a) and 10(b) show the bending steps for forming the bent portion 182 of the inner plate member 180.

First, when the inner plate member 180 of the bicycle rear derailleur 100 of the invention is punched out from the metal plate M by the punching machine (not shown), the punching is performed such that the bent portion 182 is of a shape, as shown in Figure 9, which includes a first bent part 182a at a front end portion of the bent portion 182 and a second bent part 182b connecting an outer frame portion of the inner plate member 180 and the first bent part 182a. The profile of the front end edge 182a' of the first bent part 182a is formed so as to correspond to that of the portion of the outer periphery of the outer plate member 150 facing the front end edge 182a'. As shown in Figure 6, for example, in a case that the portion 150' of the outer periphery of the outer plate member 150 forming the disengagement prevention portion 190 is forwardly and downwardly linearly inclined with respect to the bicycle frame, in order to have the front end edge 182a' of the bent portion 182 of the inner plate member 180 located very close to the outer peripheral portion 150' of the outer plate member 150, the front end edge 182a' of the bent portion 182 of the inner plate member 180 is also formed to be linearly inclined forwardly and downwardly.

Next, when the bent portion 182 having the first bent part 182a and the second bent part 182b is to be bent into a L shape, as shown in Figure 10(a), the first step is to bend the first bent part 182a such that it becomes substantially perpendicular to the second bent part 182b. Then, as shown in Figure 10(b), the second step is to bend the second bent part 182b in a direction towards the outer plate member 150 such that the second bent part 182b stands substantially perpendicular to the outer frame portion of the inner plate member 180. That is, two bending steps are used to bend the bent portion 182 into a L shape and to stand the bent portion 182 from the outer frame portion of the inner plate member 180. The disengagement prevention portion 190 of the bicycle rear derailleur 100 of the invention is defined by the L-shaped bent portion 182 of the inner plate member 180 and the outer peripheral portion 150' of the outer plate member 150.

Unlike the disengagement prevention portion 19 of the conventional bicycle rear derailleur 10, which is constituted by the first protruded portion 15a protruding rearwards outwardly from the tail end of the outer plate member 15 and the second protruded portion 18a protruding rearwards outwardly from the tail end of the inner plate member 18, the disengagement prevention portion 190 of the bicycle rear derailleur 100 of the invention is defined by a portion of the plate member (i.e., the bent portion 182) at the inner periphery of the inner plate member 180 and a portion 150' of the outer periphery of the outer plate member 150. Thus, the widths and areas of the inner plate member 180 and the outer plate member 150 of the bicycle rear derailleur 100 of the invention are smaller than those of the inner plate member 18 and the outer plate member 15 of the conventional bicycle rear derailleur 10. Consequently, a less amount of the metal plate M is required, and the numbers of the inner plate member 180 and the outer plate member 150 which can be punched out from the metal plate M of a given size increase. As a result, a saving of the material cost for the metal plate is attained. Furthermore, the overall cost is reduced, and as far as the overall weight of the bicycle rear derailleur 100 is concerned, a lightweight effect is achieved.

### Second Embodiment

Next, a bicycle rear derailleur 101 according to a second embodiment of the invention will be described with reference to Figure 11.

Since the bicycle rear derailleur 101 of the second embodiment is different from the bicycle rear derailleur 100 of the first embodiment described above merely in the shape of the bent portion 182 of the inner plate member 180, only the difference between the two embodiments will be explained and the description of all the other common parts will be omitted.

While the bent portion 182 of the bicycle rear derailleur 100 of the first embodiment is L-shaped with the first bent part 182a and the second bent part 182b, the bent portion 182 of the bicycle rear derailleur 101 of the second embodiment simply stands form the outer frame portion of the inner plate member 180, and a front end edge 182' of the bent portion 182 is located proximal to a portion 150' of an outer periphery of the outer plate member 150. Thus, a disengagement prevention portion 191 is defined by the bent portion 182 of the inner plate member 180 and the outer peripheral portion 150' of the outer plate member 150 around the tension pulley 170.

Since only a single bending step is required to form the bent portion 182 of the bicycle rear derailleur 101 of the second embodiment, the manufacturing process is simplified and the cost is further reduced as compared with the first embodiment described above. Furthermore, with the simple shape of the bent portion 182, the overall weight of the bicycle rear derailleur is further reduced.

### Third Embodiment

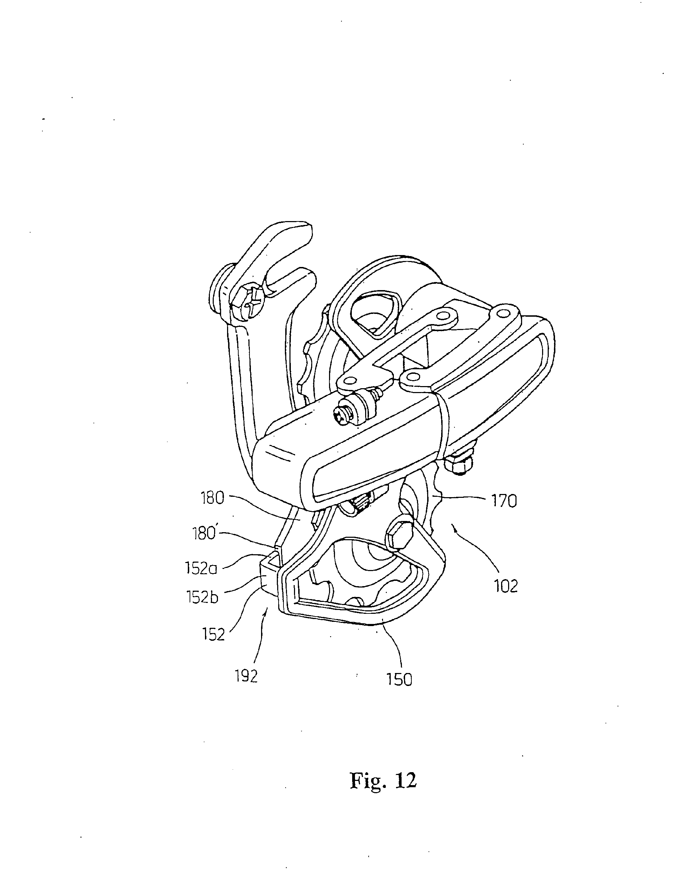

Next, a bicycle rear derailleur 102 according to a third embodiment of the invention will be described with reference to Figure 12.

Since the bicycle rear derailleur 102 of the third embodiment is different from the bicycle rear derailleur 100 of the first embodiment described above merely in constructions of respective disengagement prevention portions 192 and 190, only the difference between the two embodiments will be explained and the description of all the other common parts will be omitted.

In the bicycle rear derailleur 100 of the first embodiment, the L-shaped bent portion 182 having the first bent part 182a and the second bent part 182b is provided at the inner plate member 180. In the bicycle rear derailleur 102 of the third embodiment, on the contrary, a L-shaped bent portion 152 having a first bent part 152a and a second bent part 152b is provided at the outer plate member 150. Thus, a disengagement prevention portion 192 is defined by the L-shaped bent portion 152 of the outer plate member 150 and a portion 180' of an outer periphery of the inner plate member 180 around the tension pulley 170.

With this structure, same functions and effects as those of the bicycle rear derailleur 100 of the first embodiment can be achieved by the bicycle rear derailleur 102 of the third embodiment.

Furthermore, while in the bicycle rear derailleur 102 of the third embodiment, the bent portion 152 provided at the outer plate member 150 is formed into a L shape with the first bent part 152a and the second bent part 152b similar to the first embodiment, the present invention is not limited thereto, and the bent portion 152 can be formed into a shape the same as that of the bent portion 182 of the second embodiment described above to thereby achieve the same functions and effects.

### Fourth Embodiment

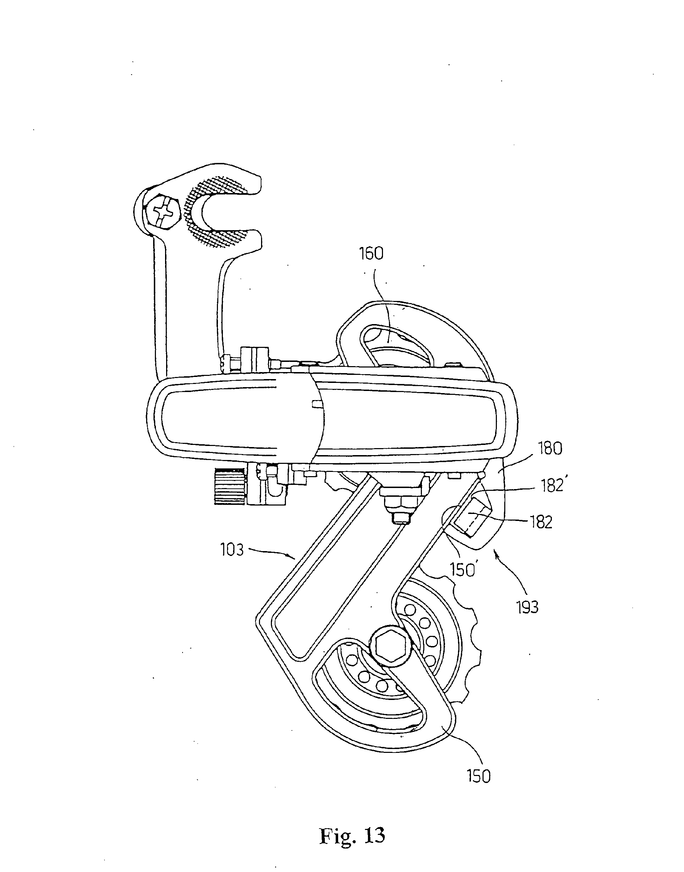

Next, a bicycle rear derailleur 103 according to a fourth embodiment of the invention will be described with reference to Figure 13.

Since the bicycle rear derailleur 103 of the fourth embodiment is different from the bicycle rear derailleur 100 of the first embodiment described above merely in locations at which respective disengagement prevention portions 193 and 190 are provided, only the difference between the two embodiments will be explained and the description of all the other common parts will be omitted.

In the bicycle rear derailleur 100 of the first embodiment, the disengagement prevention portion 190 is provided near the tension pulley 170 to prevent the chain 4 from disengaging from the tension pulley 170. In this embodiment, the disengagement prevention portion 193 is provided near the guide pulley 160, as shown in Figure 13, to prevent the chain 4 from disengaging from the guide pulley 160.

As shown in Figure 13, a L-shaped bent portion 182 is formed from a portion of the plate member at an inner periphery of the inner plate member 180, and the disengagement prevention portion 193 is defined by the L-shaped bent portion 182 and a portion 150' of an outer periphery of the outer plate member 150 close to a front end edge 182' of the bent portion 182.

With this bicycle rear derailleur 103 of the fourth embodiment, except for the slightly different function of preventing the chain 4 from disengaging from the guide pulley 160, all of the other functions and effects are the same as those of the bicycle rear derailleur 100 of the first embodiment.

### Fifth Embodiment

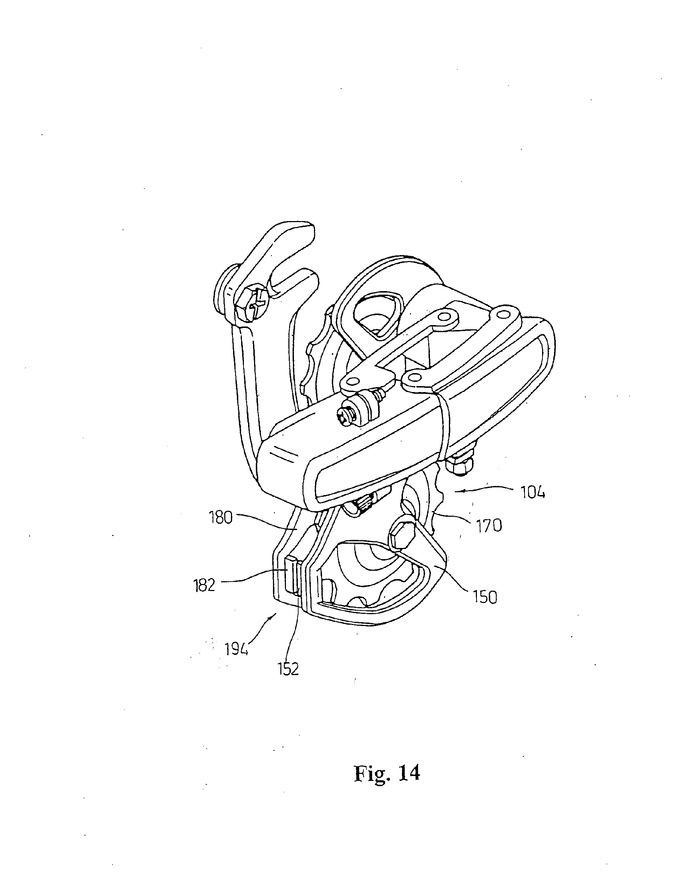

Next, a bicycle rear derailleur 104 according to a fifth embodiment of the invention will be described with reference to Figure 14.

Since the bicycle rear derailleur 104 of the fifth embodiment is different from the bicycle rear derailleur 101 of the second embodiment described above merely in constructions of respective disengagement prevention portions 194 and 191, only the difference between the two embodiments will be explained and the description of all the other common parts will be omitted.

In the bicycle rear derailleur 101 of the second embodiment described above, the disengagement prevention portion 191 is defined by the bent portion 182 which is formed by bending a portion of the plate member at an inner periphery of the inner plate member 180 such that it stands from the outer frame portion of the inner plate member 180, and the outer peripheral portion 150' of the outer plate member 150 adjacent to the front end edge 182' of the bent portion 182. In contrast, the disengagement prevention portion 194 of the fifth embodiment is defined by a bent portion 182 which is formed by bending a portion of the plate member at an inner periphery of the inner plate member 180 in a direction towards the outer plate member 150 such that the bent portion 182 stands from the outer frame portion of the inner plate member 180, and a bent portion 152 which is formed by bending a portion of the plate member at an inner periphery of the outer plate member 150 in a direction towards the inner plate member 180 such that the bent portion 152 stands from the outer frame portion of the outer plate member 150.

With the structure of the fifth embodiment, each of the bent portion 182 of the inner plate member 180 and the bent portion 152 of the outer plate member 150 can be formed by a single bending step. The disengagement prevention portion 194 defined by the bent portion 182 of the inner plate member 180 and the bent portion 152 of the outer plate member 150 is provided near the tension pulley 170 to prevent the chain 4 from disengaging from the tension pulley 170. All the other advantages, such as the saving of material and the reduction of cost and weight, are substantially the same as those of the bicycle rear derailleurs 100 to 103 of the first to the fourth embodiments.

### Effects of the Invention

From the above description, it can be appreciated that with the structure of the bicycle rear derailleur according to the present invention, main components of the rear derailleur, such as the inner and outer plate members, can be made from steel plates having smaller areas, thereby decreasing the amount of material used and hence achieving significant cost reduction and lightweight effect while performance and functions of the rear derailleur are kept the same as those of a conventional bicycle rear derailleur of the same type.

### List of Reference Numerals

- 1: bicycle
- 2: bicycle frame
- 3: handlebar
- 4: chain
- 5: rear wheel
- 11: bracket
- 10, 100, 101, 102, 103, 104: bicycle rear derailleur
- 12, 120: base member
- 13, 130: link mechanism
- 14, 140: movable member
- 15, 150: outer plate member
- 15a: first protruded portion
- 18a: second protruded portion
- 16, 160: guide pulley
- 17, 170: tension pulley
- 18, 180: inner plate member
- 19, 190, 191, 192, 193, 194: disengagement prevention portion
- 20: rear sprocket
- 152, 182: bent portion

## Claims

1. A rear derailleur (100) for a bicycle (1) for shifting a chain (4) engaging one of a plurality of sprockets (20) for driving a rear wheel of the bicycle, said rear derailleur comprising a bracket (110) fixed to a frame (2) of the bicycle, a base member (120) supported by said bracket, a link mechanism (130) coupled at one end thereof to said base member, a movable member (140) coupled to the other end of said link mechanism, an outer plate member (150) movably supported to said movable member and an inner plate member (180) located inwardly of said outer plate member for, together with said outer plate member, freely rotatably supporting a guide pulley (160) and a tension pulley (170) between said outer plate member and said inner plate member, **characterized in that**
at least one of said inner and outer plate members (180, 150) includes a bent portion (182) formed by bending a plate member portion at an inner periphery of said at least one of said inner and outer plate members in a direction towards the other of said inner and outer plate members, and
a disengagement prevention portion (190) for preventing said chain from disengaging from said tension pulley (170) and/or said guide pulley (160) is defined by said bent portion (182) and said the other of said inner and outer plate members (180, 150) facing said bent portion.

2. The rear derailleur according to claim 1, wherein said disengagement prevention portion (190) is defined by said bent portion (182) and a portion of an outer periphery of said the other of said inner and outer plate members (180, 150) facing said bent portion.

3. The rear derailleur according to claim 1, wherein said bent portion (182) is formed by bending a plate member portion at an inner periphery of said inner plate member.

4. The rear derailleur according to claim 1, wherein said bent portion is formed by bending a plate member portion at an inner periphery of said outer plate member.

5. The rear derailleur according to claim 1, 2, 3 or 4, wherein said disengagement prevention portion (190) is provided near said tension pulley.

6. The rear derailleur according to claim 1, 2, 3, 4 or 5, wherein said bent portion (182) is of an L shape.

7. The rear derailleur according to claim 1, 2 or 3, wherein said disengagement prevention portion (190) is provided near said guide pulley (160).

8. The rear derailleur according to claim 5 and 7, wherein said bent portion (182) is of a L shape.

9. A rear derailleur (100) for a bicycle (1) for shifting a chain (4) engaging one of a plurality of sprockets (20) for driving a rear wheel of the bicycle, said rear derailleur comprising a bracket (110) fixed to a frame (2) of the bicycle, a base member (120) supported by said bracket, a link mechanism (130) coupled at one end thereof to said base member, a movable member (140) coupled to the other end of said link mechanism, an outer plate member (150) movably supported to said movable member and an inner plate member (180) located inwardly of said outer plate member for, together with said outer plate member, freely rotatably supporting a guide pulley (160) and a tension pulley (170) between said outer plate member and said inner plate member, **characterized in that**
said inner plate member (180) includes a bent portion (182) formed by bending a plate member portion at an inner periphery of said inner plate member (180) in a direction towards said outer plate member (150), and said outer plate member includes a bent portion (182) formed by bending a plate member portion at an inner periphery of said outer plate member (150) in a direction towards said inner plate member (180), and
a disengagement prevention portion (190) for preventing said chain from disengaging from said tension pulley (170) and/or said guide pulley (160) is defined by said bent portions (182) of said inner and outer plate members.

10. The rear derailleur according to claim 10, wherein said disengagement prevention portion (190) is provided near said tension pulley (170).
